# EUROPEAN PATENT APPLICATION

(11) **EP 4 266 759 A1**
(43) Date of publication of application: **25.10.2023**
(21) Application number: 21916897.8
(22) Date of filing: 11.01.2021
(51) Int. Cl.: H04W 48/10, H04W 72/00

(54) **ACCESS TYPE INDICATION METHOD, TERMINAL DEVICE, APPLICATION SERVER, AND NETWORK FUNCTION ENTITY**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Ipside
(86) International application number: PCT/CN2021/071145
(87) International publication number: WO 2022/147844

(57) **Abstract**

The present application relates to an access type indication method, a terminal device, an application server, and a network function entity. The method comprises: the terminal device sends first indication information to the application server, the first indication information being used for indicating an access type of the terminal device. By means of the method in embodiments of the present application, an access type indication of a terminal and an application layer can be realized.

## Description

### TECHNICAL FIELD

Embodiments of the disclosure relate to the field of communication, and particularly to a method for access type indication, a terminal device, an application server and a network function entity.

### BACKGROUND

Satellite access is an important access manner in 5th Generation (5G) mobile communication systems, which has characteristics of wide coverage and long delay. An accessed satellite can be Low Earth Orbit (LEO) satellite, Medium Earth Orbit (MEO) satellite, Geostationary Earth Orbit (GEO) satellite, High Elliptical Orbit (HEO) satellite, etc., that is, the accessed satellites in low orbit, medium orbit and high orbit. The propagation delay of a satellite access system can reach the magnitude of several hundred milliseconds, which has a huge difference with the delay of a common ground base station access. In this case, data transmission time of an Internet Protocol (IP) Multimedia Subsystem (IMS) will be greatly increased, and values of the related parameters in the IMS need to be reset. However, the IMS, as an application layer protocol, cannot perceive the difference between the access manners of the bottom layer, which causes that the Quality of Service (QoS) of application layer services cannot be guaranteed.

### SUMMARY

In view of the above, embodiments of the disclosure provide a method for access type indication, a terminal device and a network device, which can be used to solve at least one technical problem above.

An embodiment of the disclosure provides a method for access type indication, which is applied to a terminal device. The method includes the following operation.

The terminal device transmits first indication information to an application server, the first indication information being used for indicating an access type of the terminal device.

An embodiment of the disclosure provides a method for access type indication, which is applied to an application server. The method includes the following operations.

The application server receives first indication information transmitted by a terminal device, the first indication information being used for indicating an access type of the terminal device.

The application server updates settings of a related network function entity according to the first indication information.

An embodiment of the disclosure provides a method for access type indication, which is applied to a network function entity. The method includes the following operations.

The network function entity receives indication information transmitted by an application server, the indication information being used for indicating an access type of the terminal device.

The network function entity configures the terminal device according to the indication information.

An embodiment of the disclosure provides a terminal device including a transmitting module.

The transmitting module is configured to transmit first indication information to an application server, the first indication information being used for indicating an access type of the terminal device.

An embodiment of the disclosure provides an application server including a receiving module and an updating module.

The receiving module is configured to receive first indication information transmitted by a terminal device, the first indication information being used for indicating an access type of the terminal device.

The updating module is configured to update settings of a related network function entity according to the first indication information.

An embodiment of the disclosure provides a network function entity including a receiving module and a configuration module.

The receiving module is configured to receive indication information transmitted by an application server, the indication information being used for indicating an access type of the terminal device.

The configuration module is configured to configure the terminal device according to the indication information.

An embodiment of the disclosure provides a terminal device including a processor and a memory for storing a computer program, where the processor is configured to call and run the computer program stored in the memory, to perform the above mentioned method.

An embodiment of the disclosure provides a network device including a processor and a memory for storing a computer program, where the processor is configured to call and run the computer program stored in the memory, to perform the above mentioned method.

An embodiment of the disclosure provides a chip including a processor, where the processor is configured to call and run a computer program from a memory, to cause a device on which the chip is installed to perform the above mentioned method.

An embodiment of the disclosure provides a computer-readable storage medium for storing a computer program, where the computer program causes a computer to perform the above mentioned method.

An embodiment of the disclosure provides a computer program product including computer program instructions which cause a computer to perform the above mentioned method.

An embodiment of the disclosure provides a computer program causing a computer to perform the above mentioned method.

According to the embodiments of the disclosure, the terminal device can inform the application server of access type information, and the application server can update the settings of the relevant network function entity according to the access type of the terminal after receiving the access type information, so as to adapt to the demand of the current access type and make the QoS not affected by the access type to a certain extent.

### BRIEF DESCRIPTION OF THE DRAWINGS

FIG. 1 is a schematic diagram of a communication system architecture of an embodiment of the disclosure;
FIG. 2 is a schematic diagram of access of a terminal device to a network through a satellite;
FIG. 3 is a schematic diagram of a process of IMS registration;
FIG. 4 is a schematic diagram of a process of IMS speech establishment;
FIG. 5 is a flow diagram of a method for access type indication according to an embodiment at a terminal side of the disclosure;
FIG. 6 is a flow diagram of a method for access type indication according to an embodiment at an application server side of the disclosure;
FIG. 7 is a flow diagram of a method for access type indication according to an embodiment at a network entity side of the disclosure;
FIG. 8 is a schematic diagram of interaction behaviors performed by a protocol layer of an IMS according to a satellite access type in an embodiment of the disclosure.
FIG. 9 is a schematic diagram showing that an IMS server triggers a interaction with a core network and carries access type indication according to an embodiment of the disclosure;
FIG. 10 is a schematic structural block diagram of a terminal device according to an embodiment of the disclosure;
FIG. 11 is a schematic structural block diagram of an application server according to an embodiment of the disclosure;
FIG. 12 is a schematic structural block diagram of an network function entity according to an embodiment of the disclosure;
FIG. 13 is a schematic block diagram of a communication device according to an embodiment of the disclosure;
FIG. 14 is a schematic block diagram of a chip according to an embodiment of the disclosure;
FIG. 15 is a schematic block diagram of a communication system according to an embodiment of the disclosure.

### DETAILED DESCRIPTION

The technical solution in embodiments of the disclosure will be described below in combination with the appended drawings in embodiments of the disclosure.

The technical solution in embodiments of the disclosure can be applied to various communication systems, such as Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, Advanced Long Term Evolution (LTE-A) system, New Radio (NR) system, evolution system of the NR system, LTE-based access to unlicensed spectrum (LTE-U) system, NR-based access to unlicensed spectrum (NR-U) system, Non-Terrestrial Networks (NTN) system, Universal Mobile Telecommunications System (UMTS), Wireless Local Area Network (WLAN), Wireless Fidelity (WiFi), 5th Generation (5G) system or other communication systems.

In general, traditional communication systems support a limited number of connections and are easy to implement. However, with the development of the communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc. Embodiments of the disclosure can also be applied to these communication systems.

Alternatively, the communication system in embodiments of the disclosure can be applied to a scenario of Carrier Aggregation (CA), a scenario of Dual Connectivity (DC), or a scenario of Standalone (SA).

Each embodiment is described in connection with a network device and a terminal device in embodiments of the disclosure. The terminal device may also be referred to as a User Equipment (UE), an access terminal, a user unit, a user station, a mobile station, a remote station, a remote terminal, a mobile device, a user terminal, a terminal, a wireless communication device, a user agent or a user apparatus, etc.

The terminal device may be a station (ST) in the WLAN, a cellular telephone, a cordless telephone, a Session Initiation Protocol (SIP) telephone, a Wireless Local Loop (WLL) station, a Personal Digital Processing (PDA) device, a handheld device having a wireless communication function, a computing device or other processing device connected to a wireless modem, an on-board equipment, a wearable device, a next generation communication system (such as a terminal device in an NR network), or a terminal device in a future evolved Public Land Mobile Network (PLMN), etc.

In embodiments of the disclosure, the terminal device may be arranged on land including indoor or outdoor areas, handheld, wearable or on-board; the terminal device may also be arranged on the water (such as on a ship); the terminal device may further be arranged on the air (such as on an airplane, a balloon, or a satellite).

In embodiments of the disclosure, the terminal device may be a mobile phone, a tablet computer ( or Pad), a computer with wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal equipment in a smart home, etc.

As an example rather than a limitation, in embodiments of the disclosure, the terminal device may also be a wearable device. The wearable device can also be referred to as wearable intelligent device, which are a general name of the wearable devices developed by applying a wearable technology to intelligently design the daily wear, such as glasses, gloves, watch, clothing and shoes. The wearable device is a portable device that is worn directly on the body or integrated into the user's clothes or accessories. The wearable device is not only a kind of hardware device, but also a kind of device realizing powerful functions through software support, data interaction and cloud interaction. Generalized wearable smart devices include: a device with full functions and large size (such as smart watch or smart glasses), which can implement complete or partial functions without relying on a smart phone; and a device only focusing on a certain application function (such as various smart bracelets and smart jewelries for monitoring physical signs), which need to be used in conjunction with other devices (such as smart phone).

In embodiments of the disclosure, the network device may be a device for communicating with a mobile device, and the network device may be an Access Point (AP) in a WLAN, a Base Transceiver Station (BTS) in a GSM or CDMA, a NodeB (NB) in a WCDMA, an Evolved Node B (eNB or eNodeB), a relay station or an AP, an on-board equipment or a wearable device in a LTE, a gNB in an NR network or a network device in a future evolved PLMN network, etc.

As an example rather than a limitation, in embodiments of the disclosure, the network device may have mobility, for example, the network device may be a mobile device. Optionally, the network device can be a satellite or a balloon station. For example, the satellite may be an LEO satellite, an MEO satellite, a GEO satellite, an HEO satellite, or the like. Optionally, the network device can also be a base station arranged on land, water and the like.

In embodiments of the disclosure, the network device can provide services for a cell, and the terminal device communicates with the network device through the transmission resources (such as frequency domain resources, also called spectrum resources) used by the cell. The cell may be a cell corresponding to the network device (e.g., base station), and the cell may belong to a macro base station or a base station corresponding to a small cell. The small cell may include a metro cell, a micro cell, a pico cell, a femto cell, etc. These small cells have characteristics of small coverage and low transmission power, which are suitable for providing services of high-speed data transmission.

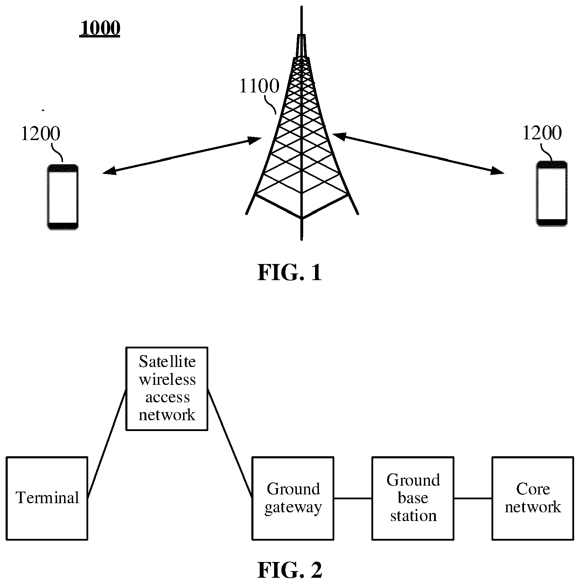

FIG. 1 schematically illustrates one network device 1100 and two terminal devices 1200. Optionally, the wireless communication system 1000 may include a plurality of network devices 1100, and any other number of terminal devices may be included within the coverage area of each network device 1100, which is not limited by embodiments of the disclosure. Optionally, the wireless communication system 1000 shown in FIG. 1 may also include other network entities, such as a Mobility Management Entity (MME), an Access and Mobility Management Function (AMF) and the like, embodiments of the disclosure are not limited thereto.

It is to be understood that terms "system" and "network" in the disclosure may usually be exchanged. In the disclosure, the term "and/or" is used for describing an association relationship of associated objects and represents that three relationships may exist. For example, A and/or B may represent three conditions: independent existence of A, existence of both A and B, and independent existence of B. In addition, character "/" in the disclosure usually represents that previous and next associated objects form an "or" relationship.

In the description of the embodiments of the disclosure, the term "corresponding to" may represent that there is a direct correspondence or an indirect correspondence relationship between two elements, may also represent that there is an association relationship between the two elements, may also be a relationship in which one element indicates or is indicated by the other element, or one element configures or is configured by the other element, etc.

In order to clearly illustrate the idea of the embodiments of the disclosure, the interaction between a terminal and an application layer in a communication system is briefly described at first.

Satellite access is an important part of the 5G access technology. At present, 3GPP has supported an access of the terminal to a ground base station through a satellite. Referring to Fig. 2, the ground base station and the terrestrial gateway can be arranged together or separately, and the core network can determine, based on a base station identifier and/or a corresponding Tracking Area Code (TAC) of the ground base station, whether the base station is connected with the terminal through a satellite access network. In the three satellite access manners (LEO, MEO and GEO), the propagation delay can reach the magnitude of several hundred milliseconds, which has a huge difference with the delay of a common ground base station access.

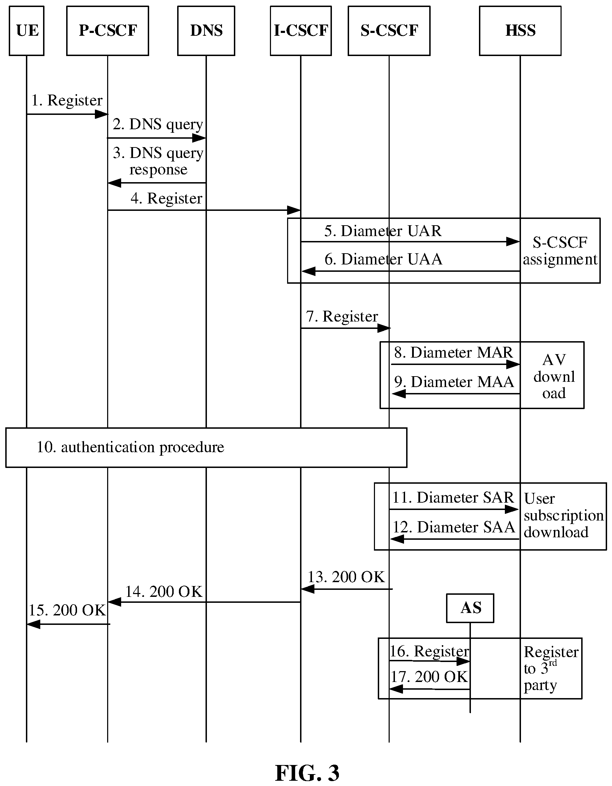

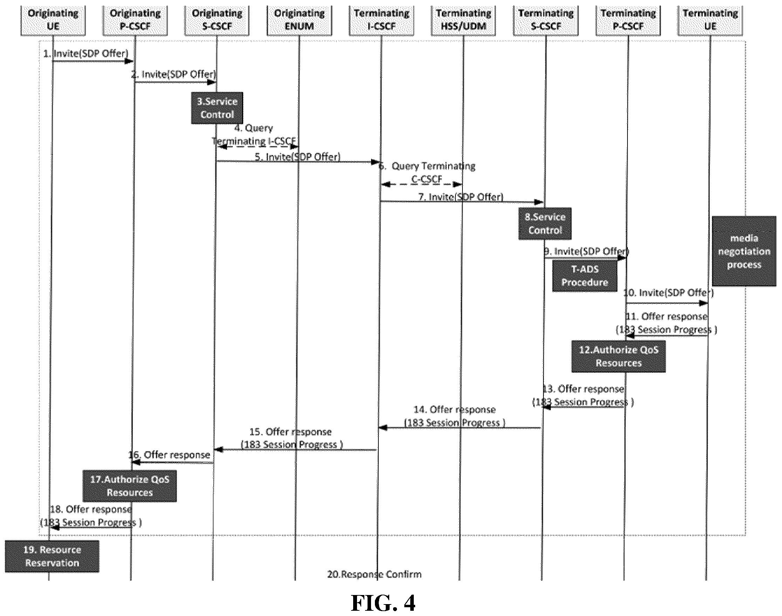

On the other hand, at present, IMS services of the UE (including but not limited to voice, video, short message, etc.) are completed through SIP signaling interaction, which includes the important processes shown in FIG. 3 and FIG. 4. FIG. 3 shows the IMS registration process in which the UE needs to send a Register message to the IMS server P-CSCF, and the P-CSCF will further interact with other network elements to complete the registration process. FIG. 4 shows the IMS voice established process in which the IMS needs to trigger establishment of a QoS data flow (where 5QI=1) for the core network PCF. As shown in FIG. 4, in operation 12 and operation 17, the P-CSCFs in the IMS trigger the establishment of a voice QoS flow for their respective PCFs, the PCF determines according to a request of the IMS (including identifier related to the voice) that the request is used for establishing the voice, thus the establishment of a data flow with 5QI=1 (or 5QI=2) is triggered and the data flow is established through a base station.

However, because the propagation delay of the satellite access system is much larger than that of the common ground base station access, the transmission time of the SIP signaling and the data in the IMS layer will also be greatly increased, and the transmission delay of data packets is very large, which cannot meet the requirements such as requirements of voice data flows. In this case, values of the related parameters in the IMS need to be reset. However, the IMS, as an application layer protocol, cannot perceive the difference between the access manners of the bottom layer, which causes that the Quality of Service (QoS) of application layer services cannot be guaranteed.

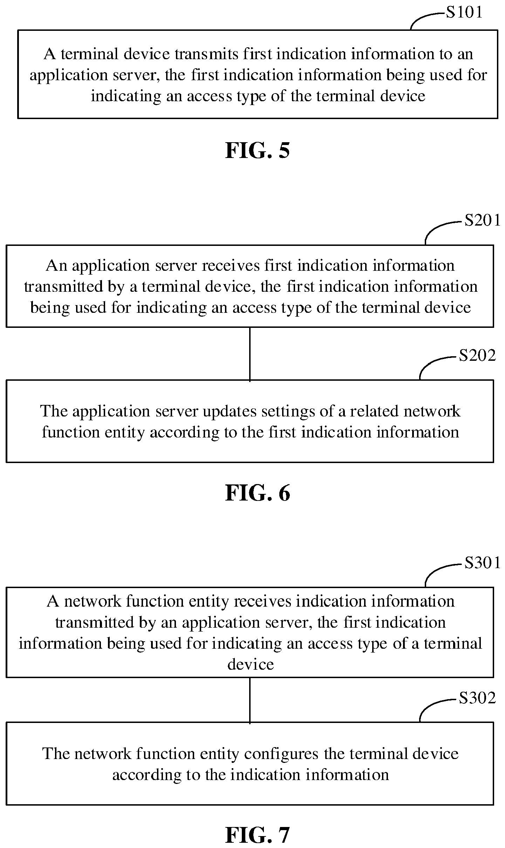

To this end, an embodiment of the disclosure provides a method for access type indication, which is applied to a terminal device. Referring to FIG. 5, the method includes operation 101.

In operation 101, the terminal device transmits first indication information to an application server, the first indication information being used for indicating an access type of the terminal device.

Correspondingly, an embodiment of the disclosure further provides an access manner indication method, which is applied to an application server. Referring to FIG. 6, the method includes operations 201-202.

In operation 201, the application server receives first indication information transmitted by a terminal device, the first indication information being used for indicating an access type of the terminal device.

In operation 202, the application server updates settings of a related network function entity according to the first indication information.

According to the embodiment of the disclosure, the terminal device can inform the application server of access type information, and the application server can update the settings of the relevant network function entity according to the access type of the terminal after receiving the access type information. Taking the scenario of satellite access as an example, when the application server knows that the terminal is accessed through a satellite, the application server can perform necessary settings to adapt to the long delay of data transmission after the satellite access, so as to guarantee the QoS of the system. Embodiments of the disclosure may be implemented in various manners, which are described in detail below.

According to an embodiment of the disclosure, the first indication information includes access of the terminal device through a satellite, or access of the terminal device through a terrestrial network device.

According to an embodiment of the disclosure, the first indication information includes at least one of: access of the terminal device to a network through an LEO satellite, access of the terminal device to the network through an MEO satellite, or access of the terminal device to the network through a GEO satellite.

According to an embodiment of the disclosure, the first indication information further includes a propagation delay between the terminal device and a network device, where the network device includes at least one of: a base station, a ground gateway or a core network gateway.

According to an embodiment of the disclosure, the terminal device sets, according to the access type, behaviors related to transmitting or receiving data packets to or from a protocol layer of an IMS.

According to an embodiment of the disclosure, the terminal device set at least one of a value of a first timer or a value of a second timer according to the access type. The first indication information further includes at least one of the value of the first timer or the value of the second timer. The first timer includes a retransmission timer between the terminal device and a P-CSCF, and the second timer includes a wait timer for reception of a reply message by the terminal device.

According to an embodiment of the disclosure, the terminal device receives at least one of a value of a first timer or a value of a second timer transmitted by the application server.

According to an embodiment of the disclosure, the terminal device sets a duration of a buffer according to the access type.

According to an embodiment of the disclosure, the first indication information is carried by an SIP message.

According to an embodiment of the disclosure, the first indication information is added in a packet header of the SIP message.

According to an embodiment of the disclosure, the first indication information is carried by an SIP Invite message.

According to an embodiment of the disclosure, the first indication information is carried by an SIP Register message.

According to an embodiment of the disclosure, the terminal device transmits the first indication information to the application server during accessing of the terminal device to a network; and/or the terminal device transmits the first indication information to the application server in a case where the access type of the terminal device accessing to the network changes.

According to an embodiment of the disclosure, the application server includes an application server in an IMS; or the application server includes at least one of: a P-CSCF, an Interrogating-Call Session Control Function (I-CSCF), a Service Call Continuity Application Server (SCC AS), or an E.164 Number URI Mapping (ENUM) server.

According to an embodiment of the disclosure, the application server sets, according to the access type, behaviors related to transmitting or receiving data packets to or from a protocol layer of an IMS.

According to an embodiment of the disclosure, the first indication information further includes at least one of a value of a first timer or a value of a second timer. The application server updates at least one of the value of the first timer or the value of the second timer according to at least one of the value of the first timer or the value of the second timer in the first indication information. The first timer includes a retransmission timer between the terminal device and a P-CSCF, and the second timer includes a wait timer for reception of a reply message by the terminal device.

According to an embodiment of the disclosure, the application server determines at least one of a value of a first timer or a value of a second timer according to the first indication information. The application server transmits at least one of the value of the first timer or the value of the second timer to the terminal device.

According to an embodiment of the disclosure, the application server receives the first indication information transmitted by the terminal device during accessing of the terminal device to a network; and/or the application server receives the first indication information transmitted by the terminal device in a case where the access type of the terminal device accessing to the network changes.

According to an embodiment of the disclosure, the application server transmits second indication information to a network function entity. The second indication information is used for indicating the access type of the terminal device. The second indication information is generated based on the first indication information.

According to an embodiment of the disclosure, the second indication information is carried by an Authorize/Authenticate-Request (AAR) message, and the network function entity includes a Policy Control Function (PCF).

Correspondingly, an embodiment of the disclosure further provides an access manner indication method, which is applied to a network function entity. Referring to FIG. 7, the method includes operations 301-302.

In operation 301, the network function entity receives indication information transmitted by an application server. The indication information is used for indicating an access type of a terminal device.

In operation 302, the network function entity configures the terminal device according to the indication information.

According to an embodiment of the disclosure, the indication information includes access of the terminal device through a satellite, or access of the terminal device through a terrestrial network device.

According to an embodiment of the disclosure, the indication information includes at least one of: access of the terminal device to a network through an LEO satellite, access of the terminal device to the network through an MEO satellite, or access of the terminal device to the network through a GEO satellite.

According to an embodiment of the disclosure, the indication information further includes a propagation delay between the terminal device and a network device. The network device includes at least one of: a base station, a ground gateway or a core network gateway.

According to an embodiment of the disclosure, the indication information further includes at least one of a value of a first timer or a value of a second timer. The first timer includes a retransmission timer between the terminal device and a P-CSCF, and the second timer includes a wait timer for reception of a reply message by the terminal device.

According to an embodiment of the disclosure, the indication information is carried by an AAR message, and the network function entity includes a PCF.

According to at least an embodiment of the disclosure, a terminal may transmit a satellite access indication to an IMS server via IMS signaling, where the satellite access indication may further indicate access to different orbits, such as LEO, MEO, or GEO. The IMS server can set the interaction behavior of each node in the IMS layer according to the satellite access indication, for example, increasing the value of the timer and/or buffer to meet the high requirements on the propagation delay, so as to avoid the influence of long delay on data packet receiving and reporting. In addition, the IMS server can also transmit the satellite access indication to the core network, so that the core network performs appropriate behaviors according to the access type of the terminal.

Embodiments of the disclosure are not limited to the satellite access scenario, and the access type indication may also be used to indicate other access types (such as NR, E-UTRA, WLAN access, etc.). The applicable system architecture includes, but not limited to, the 5G system.

The implementations of the method for access type indication of the embodiments of the disclosure has been described in the above embodiments, and the specific implementation process of the embodiments of the disclosure will be described by a plurality of specific examples below.

### First embodiment

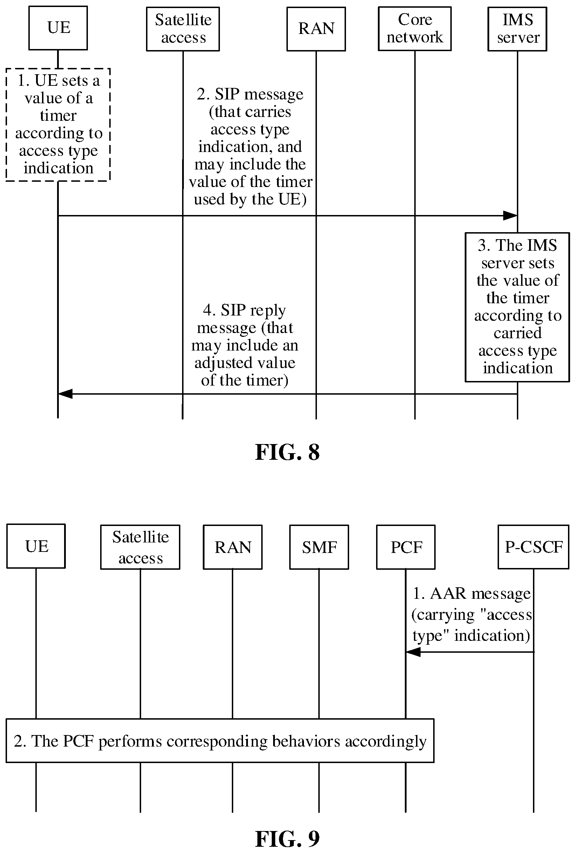

Referring to FIG. 8, in the embodiment, an "access type indication" is introduced in the SIP message, and the terminal and the IMS server can adjust behaviors related to transmitting or receiving data packets to or from a protocol layer of the IMS according to the "access type indication", such as setting a timer and/or a Buffer, as described in detail below.

In the embodiments of the disclosure, the "access type indication" may include at least one of the following information:
(1) the manner in which the terminal accesses the network, such as satellite access;
(2) through which one of an LEO satellite, an MEO satellite or a GEO satellite, the terminal accesses the network; or
(3) information about a propagation delay between the terminal and the network.

The information about the propagation delay between the terminal and the network of item (3) may further include at least one of:
the propagation delay between the terminal and the ground base station;
the propagation delay between the terminal and the ground gateway; or
the propagation delay between the terminal and the core network gateway.

With regard to an SIP message carrying an "access type indication", in an implementation of the disclosure, the SIP message may be an SIP Invite message, which is an SIP message initiated when a voice service is established. In another implementation of the disclosure, the SIP message may also be an SIP Register message, which is a message used for registering the terminal on the IMS network and subsequent periodic registration. For example, when the UE accesses the network or when the access type changes, the UE may initiate an SIP message (e.g., initiate a Register message) for informing the IMS server of the access type.

In an implementation of the disclosure, the "access type indication" may be added in the packet header of the SIP message, such as the field portion of "P-Access-Network-Info".

It should be noted that the "access type indication" described in the embodiment may be used to indicate other access technologies besides the satellite access, including, but not limited to, NR access, WLAN access, E-UTRA access, etc.

In embodiments of the disclosure, the adjustment of the value of the timer and/or the value of the buffer may include the following:
(1) a retransmission interval timer (which can include an uplink timer and a downlink timer) for the SIP message transmitted between the terminal and the P-CSCF has its value increased;
(2) a wait timer of the terminal for the reply message has its value increased, that is, the value of the wait timer (which can include an uplink timer and a downlink timer) for reception of the reply message increases; and
(3) the duration of the buffer in the terminal increases.

In embodiments of the disclosure, both the terminal and the IMS server can set the value of the timer according to the access type, which can be realized in at least one of the following ways:
(1) the terminal sets the value of the timer by itself, and transmits the access type indication and/or the set value of the timer to the IMS server; or
(2) adjustment of the value of the timer is not performed at the terminal side, but the IMS server determines the value of the timer according to the access type indication after receiving the access type indication, and notifies the value of the timer to the terminal in the SIP reply message transmitted by the IMS server to the terminal.

In embodiments of the disclosure, the IMS server may be one or more of: P-CSCF, I-CSCF, SCC AS, ENUM server or the like on the calling side and the called side.

### Second embodiment

Referring to FIG. 9, in an embodiment of the disclosure, the IMS server triggers an interaction with the core network and carries an access type indication. Specifically, the IMS server (e.g., P-CSCF) may interact with the core network (e.g., PCF) to establish a specific QoS data flow, charging rules, UE rules, etc. To this end, the IMS server (e.g., P-CSCF) can carry access type parameters in an AAR message, so that the PCF performs corresponding behaviors accordingly, for example, establishing a QoS data flow specific to the satellite access for the UE, establishing a specific charging rule for the UE or transmitting a specific UE policy to the UE.

According to at least an embodiment of the disclosure, the protocol layer of the IMS can set the value of the timer according to the access type (e.g., satellite access) to adapt different scenarios, and can make full use of the existing mechanism to realize the control of the access type and the setting of the value of the timer, thus ensuring that the application layer service is not affected by the change of the access type of the terminal.

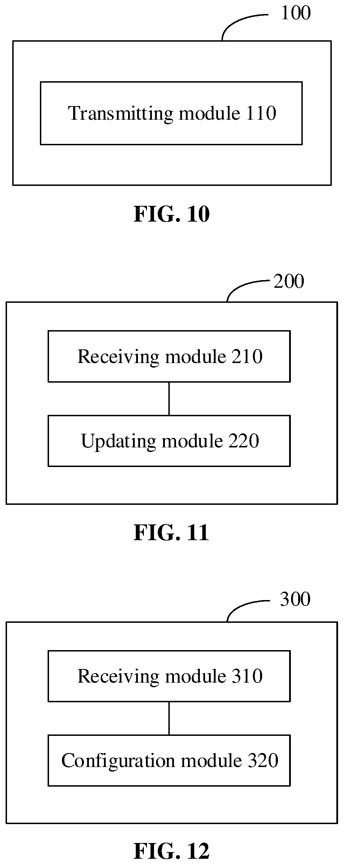

The specific arrangement and implementation of the embodiments of the disclosure have been described above from different views through a plurality of the embodiments. Corresponding to the processing method of the at least an embodiment described above, an embodiment of the disclosure further provides a terminal device 100, referring to FIG. 10, the terminal device 100 includes a transmitting module 110.

The transmitting module 110 is configured to transmit first indication information to an application server, the first indication information being used for indicating an access type of the terminal device.

Optionally, the first indication information includes access of the terminal device through a satellite, or access of the terminal device through a terrestrial network device.

Optionally, the first indication information includes at least one of: access of the terminal device to a network through an LEO satellite, access of the terminal device to the network through an MEO satellite, or access of the terminal device to the network through a GEO satellite.

Optionally, the first indication information further includes a propagation delay between the terminal device and a network device, the network device includes at least one of: a base station, a ground gateway or a core network gateway.

Optionally, the terminal device 100 further includes a first setting module, configured to set, according to the access type, behaviors related to transmitting or receiving data packets to or from a protocol layer of an IMS.

Optionally, the terminal device 100 further includes a second setting module, configured to set at least one of a value of a first timer or a value of a second timer according to the access type. The first indication information further includes at least one of the value of the first timer or the value of the second timer. The first timer includes a retransmission timer between the terminal device and a P-CSCF, and the second timer includes a wait timer for reception of a reply message by the terminal device.

Optionally, the terminal device 100 further includes a receiving module, configured to receive at least one of a value of a first timer or a value of a second timer transmitted by the application server. The first timer includes a retransmission timer between the terminal device and a P-CSCF, and the second timer includes a wait timer for reception of a reply message by the terminal device.

Optionally, the terminal device 100 further includes a third setting module, configured to set a duration of a buffer according to the access type.

Optionally, the first indication information is carried by an SIP message.

Optionally, the first indication information is added in a packet header of the SIP message.

Optionally, the first indication information is carried by an SIP Invite message.

Optionally, the first indication information is carried by an SIP Register message.

Optionally, the transmitting module transmits the first indication information to the application server during accessing of the terminal device to a network; and/or the transmitting module transmits the first indication information to the application server in a case where the access type of the terminal device accessing to the network changes.

Optionally, the application server includes an application server in an IMS; or the application server includes at least one of: a P-CSCF, an I-CSCF, an SCC AS, or an ENUM server.

Corresponding to the processing method of the at least an embodiment described above, an embodiment of the disclosure further provides an application server 200, referring to FIG. 11, the application server 200 includes a receiving module 210 and an updating module 220.

The receiving module 210 is configured to receive first indication information transmitted by a terminal device, the first indication information being used for indicating an access type of the terminal device.

The updating module 220 is configured to update settings of a related network function entity according to the first indication information.

Optionally, the first indication information includes access of the terminal device through a satellite, or access of the terminal device through a terrestrial network device.

Optionally, the first indication information includes at least one of: access of the terminal device to a network through an LEO satellite, access of the terminal device to the network through an MEO satellite, or access of the terminal device to the network through a GEO satellite.

Optionally, the first indication information further includes a propagation delay between the terminal device and a network device, the network device includes at least one of: a base station, a ground gateway or a core network gateway.

Optionally, the application server 200 further includes a setting module, configured to set, according to the access type, behaviors related to transmitting or receiving data packets to or from a protocol layer of an IMS.

Optionally, the first indication information further includes at least one of a value of a first timer or a value of a second timer. The updating module is further configured to update at least one of the value of the first timer or the value of the second timer according to at least one of the value of the first timer or the value of the second timer in the first indication information. The first timer includes a retransmission timer between the terminal device and a P-CSCF, and the second timer includes a wait timer for reception of a reply message by the terminal device.

Optionally, the updating module is further configured to determine at least one of the value of the first timer or the value of the second timer according to the first indication information. The application server further includes a transmitting module, configured to transmit at least one of the value of the first timer or the value of the second timer to the terminal device. The first timer includes a retransmission timer between the terminal device and a P-CSCF, and the second timer includes a wait timer for reception of a reply message by the terminal device.

Optionally, the first indication information is carried by an SIP message.

Optionally, the first indication information is added in a packet header of the SIP message.

Optionally, the first indication information is carried by an SIP Invite message.

Optionally, the first indication information is carried by an SIP Register message.

Optionally, the receiving module receives the first indication information transmitted by the terminal device during accessing of the terminal device to a network; and/or the receiving module receives the first indication information transmitted by the terminal device in a case where the access type of the terminal device accessing to the network changes.

Optionally, the application server includes an application server in an IMS; or the application server includes at least one of: a P-CSCF, an I-CSCF, an SCC AS, or an ENUM server.

Optionally, the application server further includes a second transmitting module, configured to transmit second indication information to a network function entity. The second indication information is used for indicating the access type of the terminal device, and the second indication information is generated based on the first indication information.

Optionally, the second indication information is carried by an AAR message, and the network function entity includes a PCF.

Corresponding to the processing method of the at least an embodiment described above, an embodiment of the disclosure further provides an network function entity 300, referring to FIG. 12, the network function entity 300 includes a receiving module 310 and a configuration module 320.

The receiving module 310 is configured to receive indication information transmitted by an application server. The indication information is used for indicating an access type of a terminal device.

The configuration module 320 is configured to configure the terminal device according to the indication information.

Optionally, the indication information includes access of the terminal device through a satellite, or access of the terminal device through a terrestrial network device.

Optionally, the indication information includes at least one of: access of the terminal device to a network through an LEO satellite, access of the terminal device to the network through an MEO satellite, or access of the terminal device to the network through a GEO satellite.

Optionally, the indication information further includes a propagation delay between the terminal device and a network device, the network device includes at least one of: a base station, a ground gateway or a core network gateway

Optionally, the indication information further includes at least one of a value of a first timer or a value of a second timer. The first timer includes a retransmission timer between the terminal device and a P-CSCF, and the second timer includes a wait timer for reception of a reply message by the terminal device.

Optionally, the indication information is carried by an AAR message, and the network function entity includes a PCF.

Optionally, the application server includes an application server in an IMS; or the application server includes at least one of: a P-CSCF, an I-CSCF, an SCC AS, or an ENUM server.

The terminal device 100, the application server 200 and the network functional entity 300 of the embodiments of the disclosure can realize the functions of the devices in the aforementioned embodiment corresponding to the method. The corresponding processes, functions, implementation manners and beneficial effects of each module (sub-module, unit or component, etc.) in the terminal device 100, the application server 200 and the network functional entity 300 can be referred to the corresponding descriptions in the aforementioned embodiment corresponding to the method, and will not be described here.

It should be noted that the functions described by each module (sub-module, unit or component, etc.) in the terminal device 100, the application server 200 and the network functional entity 300 of the embodiments of the disclosure can be realized by different modules (sub-module, unit or component, etc.) or by the same module (sub-module, unit or component, etc.). For example, the first transmitting module and the second transmitting module can be different modules or the same module, which can realize the corresponding functions in embodiments of the disclosure. In addition, the transmitting module and the receiving module in embodiments of the disclosure can be realized by a transceiver of the device, and some or all of the remaining modules can be realized by a processor of the device.

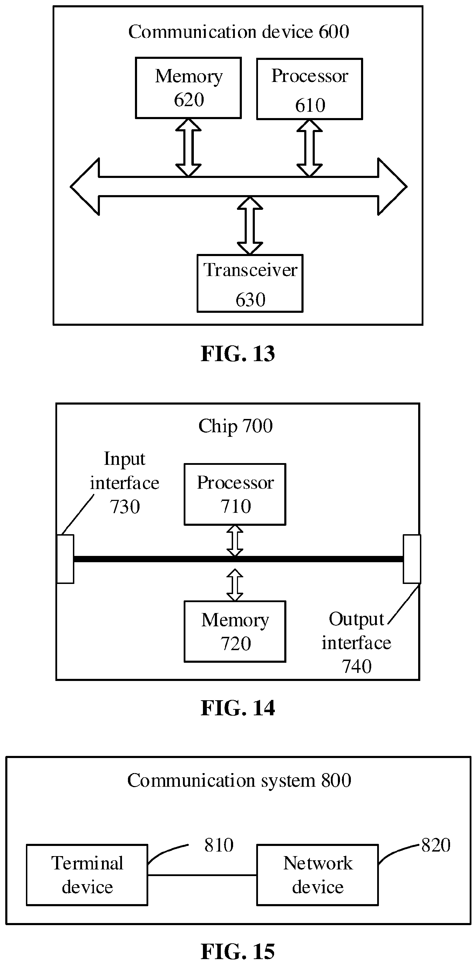

FIG. 13 is a schematic structural diagram of a communication device 600 according to an embodiment of the disclosure, the communication device 600 includes a processor 610 that can call and run a computer program from a memory to implement the method in embodiments of the disclosure.

Optionally, the communication device 600 may further include a memory 620. The processor 610 may call and run a computer program from the memory 620 to implement the method in embodiments of the disclosure.

The memory 620 may be a separate device independent of the processor 610 or may be integrated in the processor 610.

Optionally, the communication device 600 may further include a transceiver 630. The processor 610 may control the transceiver 630 to communicate with other devices. Specifically, the transceiver 630 may transmit information or data to other devices or receive information or data transmitted by other devices.

The transceiver 630 may include a transmitter and a receiver. The transceiver 630 may further include antennas, and the number of the antennas may be one or more.

Optionally, the communication device 600 can be a network device of the embodiments of the disclosure, and the communication device 600 can realize corresponding processes realized by the network device in various methods according to the embodiments of the disclosure. For the sake of simplicity, it will not be elaborated herein.

Optionally, the communication device 600 can be a terminal device according to the embodiments of the disclosure, and the communication device 600 can realize corresponding processes realized by the terminal device in the various methods according to the embodiments of the disclosure. For the sake of brevity, it will not be described herein.

FIG. 14 is a schematic structural diagram of a chip 700 according to an embodiment of the disclosure. The chip 700 includes a processor 710. The processor 710 can call and run computer programs from a memory to implement the method in the embodiments of the disclosure.

Optionally, the chip 700 may further include a memory 720. The processor 710 can call and run the computer program from the memory 720 to implement the method in the embodiments of the disclosure.

The memory 720 may be a separate device independent of the processor 710 or may be integrated into the processor 710.

Optionally, the chip 700 may further include an input interface 730. The processor 710 can control the input interface 730 to communicate with other devices or chips, and in particular to obtain information or data sent by other devices or chips.

Optionally, the chip 700 may further include an output interface 740. The processor 1310 may control the output interface 740 to communicate with other devices or chips, and in particular to output information or data to other devices or chips.

Optionally, the chip can be applied to the network device in the embodiments of the disclosure, and the chip can implement the corresponding processes realized by the network device in various methods according to the embodiments of the disclosure. For the sake of brevity, it will not be elaborated herein.

Optionally, the chip can be applied to the terminal device in the embodiments of the disclosure, and the chip can implement the corresponding processes realized by the terminal device in various methods according to the embodiments of the disclosure. For the sake of brevity, it will not be elaborated herein.

It is to be understood that the chip mentioned in the embodiments of the disclosure can also be referred to as a system level chip, a system chip, a chip system or an on-chip system chip, etc.

The processor mentioned above may be a general purpose processor, a digital signal processor (DSP), a field programmable gate array (FPGA), an application specific integrated circuit (ASIC), or other programmable logic devices, transistor logic devices, discrete hardware components, and the like. The general purpose processor mentioned above may be a microprocessor or any conventional processor or the like.

The memory mentioned above may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It is to be understood that the memory described above is exemplary, but not limiting, for example, the memory in the embodiments of the disclosure may also be a static RAM (SRAM), a dynamic RAM (DRAM), a synchronous DRAM (SDRAM), double data rate SDRAM (DDR SDRAM), enhanced SDRAM (ESDRAM), synch link DRAM (SLDRAM), Direct Rambus RAM (DR RAM), etc. That is, the memory in the embodiments of the disclosure is intended to include, but is not limited to, memories of these and any other suitable type.

FIG. 15 is a schematic block diagram of a communication system 800 according to an embodiment of the disclosure. The communication system 800 includes a terminal device 810 and a network device 820.

The terminal device 810 can be used to realize the corresponding functions realized by the terminal device in the methods according to the embodiments of the disclosure, and the network device 1420 can be used to realize the corresponding functions realized by the network device in the methods according to the embodiments of the disclosure. For the sake of simplicity, it will not be elaborated herein.

In the above embodiments, it may be implemented in whole or in part by software, hardware, firmware or any combination thereof. When implemented by software, it can be implemented in whole or in part in the form of a computer program product. The computer program product includes one or more computer instructions. When the computer program instructions are loaded and executed on a computer, the processes or functions described in accordance with embodiments of the disclosure is generated in whole or in part. The computer may be a general purpose computer, a specific computer, a computer network, or other programmable devices. The computer instructions may be stored in a computer-readable storage medium or transmitted from one computer-readable storage medium to another computer-readable storage medium, for example, the computer instructions may be transmitted from one Web site, computer, server, or data center via wired (e.g. coaxial cable, optical fiber, Digital Subscriber Line (DSL)) or wireless (e.g. infrared, wireless, microwave, etc.) to another Web site, computer, server, or data center. The computer-readable storage medium may be any usable medium accessible to a computer or a data storage device, such as a server containing one or more usable media integration, data center, etc. The available media may be a magnetic media (e.g. floppy disk, hard disk, magnetic tape), an optical media (e.g. DVD), or a semiconductor media (e.g. Solid State Disk (SSD)), etc.

It should be understood that in various embodiments of the disclosure, the size of the sequence number of the above-mentioned processes does not mean an execution order, and the execution order of each process should be determined by its function and inherent logic, and should not be limited in any way to the implementation process of the embodiments of the disclosure.

The skilled in the art will clearly appreciate that, for convenience and conciseness of description, the specific operating processes of the above-described systems, devices and units may refer to the corresponding processes in the aforementioned embodiments corresponding to the methods and will not be elaborated herein.

The above is only the specific embodiments of the disclosure, but the scope of protection of the disclosure is not limited to this. Any modifications and variations that can be easily known by the person skilled in the technical field within the scope of protection of the present application shall be included in the scope of protection of the disclosure. Therefore, the scope of protection of the disclosure shall be subject to the scope of protection of the claims.

## Claims

1. A method for access type indication, applied to a terminal device, comprising:
transmitting, by the terminal device, first indication information to an application server, the first indication information being used for indicating an access type of the terminal device.

2. The method of claim 1, wherein
the first indication information comprises: access of the terminal device through a satellite, or access of the terminal device through a terrestrial network device.

3. The method of claim 1 or 2, wherein
the first indication information comprises at least one of: access of the terminal device to a network through a Low Earth Orbit (LEO) satellite, access of the terminal device to the network through a Medium Earth Orbit (MEO) satellite, or access of the terminal device to the network through a Geosynchronous Equatorial Orbit (GEO) satellite.

4. The method of claim 3, wherein
the first indication information further comprises a propagation delay between the terminal device and a network device, wherein the network device comprises at least one of: a base station, a ground gateway or a core network gateway.

5. The method of any one of claims 1-4, further comprising:
setting, by the terminal device according to the access type, behaviors related to transmitting or receiving data packets to or from a protocol layer of an Internet Protocol (IP) Multimedia Subsystem (IMS).

6. The method of any one of claims 1-4, further comprising: setting, by the terminal device, at least one of a value of a first timer or a value of a second timer according to the access type,
wherein the first indication information further comprises at least one of the value of the first timer or the value of the second timer,
wherein the first timer comprises a retransmission timer between the terminal device and a Proxy-Call Session Control Function (P-CSCF), and the second timer comprises a wait timer for reception of a reply message by the terminal device.

7. The method of any one of claims 1-4, further comprising: receiving, by the terminal device, at least one of a value of a first timer or a value of a second timer transmitted by the application server,
wherein the first timer comprises a retransmission timer between the terminal device and a P-CSCF, and the second timer comprises a wait timer for reception of a reply message by the terminal device.

8. The method of any one of claims 1-4, further comprising:
setting, by the terminal device, a duration of a buffer according to the access type.

9. The method of any one of claims 1-8, wherein the first indication information is carried by a Session Initiation Protocol (SIP) message.

10. The method of claim 9, wherein the first indication information is added in a packet header of the SIP message.

11. The method of any one of claims 1-8, wherein the first indication information is carried by an SIP Invite message.

12. The method of any one of claims 1-8, wherein the first indication information is carried by an SIP Register message.

13. The method of any one of claims 1-12, wherein
the terminal device transmits the first indication information to the application server during accessing of the terminal device to a network; and/or
the terminal device transmits the first indication information to the application server in a case where the access type of the terminal device accessing to the network changes.

14. The method of any one of claims 1-13, wherein
the application server comprises an application server in an IMS; or
the application server comprises at least one of: a P-CSCF, an Interrogating-Call Session Control Function (I-CSCF), a Service Call Continuity Application Server (SCC AS), or an E.164 Number URI Mapping (ENUM) server.

15. A method for access manner indication, applied to an application server, comprising:
receiving, by the application server, first indication information transmitted by a terminal device, the first indication information being used for indicating an access type of the terminal device; and
updating, by the application server, settings of a related network function entity according to the first indication information.

16. The method of claim 15, wherein
the first indication information comprises: access of the terminal device through a satellite, or access of the terminal device through a terrestrial network device.

17. The method of claim 15 or 16, wherein
the first indication information comprises at least one of: access of the terminal device to a network through a Low Earth Orbit (LEO) satellite, access of the terminal device to the network through a Medium Earth Orbit (MEO) satellite, or access of the terminal device to the network through a Geosynchronous Equatorial Orbit (GEO) satellite.

18. The method of claim 17, wherein
the first indication information further comprises a propagation delay between the terminal device and a network device, wherein the network device comprises at least one of: a base station, a ground gateway or a core network gateway.

19. The method of any one of claims 15-18, further comprising:
setting, by the application server according to the access type, behaviors related to transmitting or receiving data packets to or from a protocol layer of an Internet Protocol (IP) Multimedia Subsystem (IMS).

20. The method of any one of claims 15-18, wherein the first indication information further comprises at least one of a value of a first timer or a value of a second timer,
wherein updating the settings of the related network function entity according to the first indication information comprises: updating, by the application server, at least one of the value of the first timer or the value of the second timer according to at least one of the value of the first timer or the value of the second timer in the first indication information, and
wherein the first timer comprises a retransmission timer between the terminal device and a Proxy-Call Session Control Function (P-CSCF), and the second timer comprises a wait timer for reception of a reply message by the terminal device.

21. The method of any one of claims 15-18, wherein
updating the settings of the related network function entity according to the first indication information comprises: determining, by the application server, at least one of a value of a first timer or a value of a second timer according to the first indication information;
the method further comprising: transmitting, by the application server, at least one of the value of the first timer or the value of the second timer to the terminal device,
wherein the first timer comprises a retransmission timer between the terminal device and a P-CSCF, and the second timer comprises a wait timer for reception of a reply message by the terminal device.

22. The method of any one of claims 15-21, wherein the first indication information is carried by a Session Initiation Protocol (SIP) message.

23. The method of claim 22, wherein the first indication information is added in a packet header of the SIP message.

24. The method of any one of claims 15-21, wherein the first indication information is carried by an SIP Invite message.

25. The method of any one of claims 15-21, wherein the first indication information is carried by an SIP Register message.

26. The method according to any one of claims 15-21, wherein
the application server receives the first indication information transmitted by the terminal device during accessing of the terminal device to a network; and/or
the application server receives the first indication information transmitted by the terminal device in a case where the access type of the terminal device accessing to the network changes.

27. The method of any one of claims 15-26, wherein
the application server comprises an application server in an IMS; or
the application server comprises at least one of: a P-CSCF, an Interrogating-Call Session Control Function (I-CSCF), a Service Call Continuity Application Server (SCC AS), or an E.164 Number URI Mapping (ENUM) server.

28. The method of any one of claims 15-27, further comprising:
transmitting, by the application server, second indication information to a network function entity, the second indication information being used for indicating the access type of the terminal device, wherein the second indication information is generated based on the first indication information.

29. The method of claim 28, wherein the second indication information is carried by an Authorize/Authenticate-Request (AAR) message, and the network function entity comprises a Policy Control Function (PCF).

30. A method for access manner indication, applied to a network function entity, comprising:
receiving, by the network function entity, indication information transmitted by an application server, the indication information being used for indicating an access type of a terminal device; and
configuring, by the network function entity, the terminal device according to the indication information.

31. The method of claim 30, wherein
the indication information comprises: access of the terminal device through a satellite, or access of the terminal device through a terrestrial network device.

32. The method of claim 30 or 31, wherein
the indication information comprises at least one of: access of the terminal device to a network through a Low Earth Orbit (LEO) satellite, access of the terminal device to the network through a Medium Earth Orbit (MEO) satellite, or access of the terminal device to the network through a Geosynchronous Equatorial Orbit (GEO) satellite.

33. The method of claim 32, wherein
the indication information further comprises a propagation delay between the terminal device and a network device, wherein the network device comprises at least one of: a base station, a ground gateway or a core network gateway.

34. The method of any one of claims 30-33, wherein the indication information further comprises at least one of a value of a first timer or a value of a second timer,
wherein the first timer comprises a retransmission timer between the terminal device and a Proxy-Call Session Control Function (P-CSCF), and the second timer comprises a wait timer for reception of a reply message by the terminal device.

35. The method of any one of claims 30-34, wherein the indication information is carried by an Authorize/Authenticate-Request (AAR) message, and the network function entity comprises a Policy Control Function (PCF).

36. The method of any one of claims 30-35, wherein
the application server comprises an application server in an Internet Protocol (IP) Multimedia Subsystem (IMS); or
the application server comprises at least one of: a P-CSCF, an Interrogating-Call Session Control Function (I-CSCF), a Service Call Continuity Application Server (SCC AS), or an E.164 Number URI Mapping (ENUM) server.

37. A terminal device, comprising:
a transmitting module, configured to transmit first indication information to an application server, the first indication information being used for indicating an access type of the terminal device.

38. The terminal device of claim 37, wherein
the first indication information comprises: access of the terminal device through a satellite, or access of the terminal device through a terrestrial network device.

39. The terminal device of claim 37 or 38, wherein
the first indication information comprises at least one of: access of the terminal device to a network through a Low Earth Orbit (LEO) satellite, access of the terminal device to the network through a Medium Earth Orbit (MEO) satellite, or access of the terminal device to the network through a Geosynchronous Equatorial Orbit (GEO) satellite.

40. The terminal device of claim 39, wherein
the first indication information further comprises a propagation delay between the terminal device and a network device, wherein the network device comprises at least one of: a base station, a ground gateway or a core network gateway.

41. The terminal device of any one of claims 37-40, further comprising:
a first setting module, configured to set, according to the access type, behaviors related to transmitting or receiving data packets to or from a protocol layer of an Internet Protocol (IP) Multimedia Subsystem (IMS).

42. The terminal device of any one of claims 37-40, further comprising:
a second setting module, configured to set at least one of a value of a first timer or a value of a second timer according to the access type,
wherein the first indication information further comprising at least one of the value of the first timer or the value of the second timer, wherein the first timer comprises a retransmission timer between the terminal device and a Proxy-Call Session Control Function (P-CSCF), and the second timer comprises a wait timer for reception of a reply message by the terminal device.

43. The terminal device of any one of claims 37-40, further comprising:
a receiving module, configured to receive at least one of a value of a first timer or a value of a second timer transmitted by the application server,
wherein the first timer comprises a retransmission timer between the terminal device and a P-CSCF, and the second timer comprises a wait timer for reception of a reply message by the terminal device.

44. The terminal device of any one of claims 37-40, further comprising:
a third setting module, configured to set a duration of a buffer according to the access type.

45. The terminal device of any one of claims 37-44, wherein the first indication information is carried by a Session Initiation Protocol (SIP) message.

46. The terminal device of claim 45, wherein the first indication information is added in a packet header of the SIP message.

47. The terminal device of any one of claims 37-44, wherein the first indication information is carried by an SIP Invite message.

48. The terminal device of any one of claims 37-44, wherein the first indication information is carried by an SIP Register message.

49. The terminal device of any one of claims 37-48, wherein
the transmitting module transmits the first indication information to the application server during accessing of the terminal device to a network; and/or
the transmitting module transmits the first indication information to the application server in a case where the access type of the terminal device accessing to the network changes.

50. The terminal device of any one of claims 37-49, wherein
the application server comprises an application server in an IMS; or
the application server comprises at least one of: a P-CSCF, an Interrogating-Call Session Control Function (I-CSCF), a Service Call Continuity Application Server (SCC AS), or an E.164 Number URI Mapping (ENUM) server.

51. An application server, comprising:
a receiving module, configured to receive first indication information transmitted by a terminal device, the first indication information being used for indicating an access type of the terminal device; and
an updating module, configured to update settings of a related network function entity according to the first indication information.

52. The application server of claim 51, wherein
the first indication information comprises: access of the terminal device through a satellite, or access of the terminal device through a terrestrial network device.

53. The application server of claim 51 or 52, wherein
the first indication information comprises at least one of: access of the terminal device to a network through a Low Earth Orbit (LEO) satellite, access of the terminal device to the network through a Medium Earth Orbit (MEO) satellite, or access of the terminal device to the network through a Geosynchronous Equatorial Orbit (GEO) satellite.

54. The application server of claim 53, wherein
the first indication information further comprises a propagation delay between the terminal device and a network device, wherein the network device comprises at least one of: a base station, a ground gateway or a core network gateway.

55. The application server of any one of claims 51-54, further comprising:
a setting module, configured to set, according to the access type, behaviors related to transmitting or receiving data packets to or from a protocol layer of an Internet Protocol (IP) Multimedia Subsystem (IMS).

56. The application server of any one of claims 51-54, wherein the first indication information further comprises at least one of a value of a first timer or a value of a second timer,
wherein the updating module is further configured to update at least one of the value of the first timer or the value of the second timer according to at least one of the value of the first timer or the value of the second timer in the first indication information, and
wherein the first timer comprises a retransmission timer between the terminal device and a Proxy-Call Session Control Function (P-CSCF), and the second timer comprises a wait timer for reception of a reply message by the terminal device.

57. The application server of any one of claims 51-54, wherein
the updating module is configured to determine at least one of a value of a first timer or a value of a second timer according to the first indication information,
the application server further comprises: a transmitting module, configured to transmit at least one of the value of the first timer or the value of the second timer to the terminal device,
wherein the first timer comprises a retransmission timer between the terminal device and a P-CSCF, and the second timer comprises a wait timer for reception of a reply message by the terminal device.

58. The application server of any one of claims 51-57, wherein the first indication information is carried by a Session Initiation Protocol (SIP) message.

59. The application server of claim 58, wherein the first indication information is added in a packet header of the SIP message.

60. The application server of any one of claims 51-57, wherein the first indication information is carried by an SIP Invite message.

61. The application server of any one of claims 51-57, wherein the first indication information is carried by an SIP Register message.

62. The application server of any one of claims 51-57, wherein
the transmitting module receives the first indication information transmitted by the terminal device during accessing of the terminal device to a network; and/or
the transmitting module receives the first indication information transmitted by the terminal device in a case where the access type of the terminal device accessing to the network changes.

63. The application server of any one of claims 51-62, wherein
the application server comprises an application server in an IMS; or
the application server comprises at least one of: a P-CSCF, an Interrogating-Call Session Control Function (I-CSCF), a Service Call Continuity Application Server (SCC AS), or an E.164 Number URI Mapping (ENUM) server.

64. The application server of any one of claims 51-63, further comprising:
a second transmitting module, configured to transmit second indication information to a network function entity, the second indication information being used for indicating the access type of the terminal device, wherein the second indication information is generated based on the first indication information.

65. The application server of claim 64, wherein the second indication information is carried by an Authorize/Authenticate-Request (AAR) message, and the network function entity comprises a Policy Control Function (PCF).

66. A network function entity, comprising:
a receiving module, configured to receive indication information transmitted by an application server, the indication information being used for indicating an access type of a terminal device; and
a configuration module, configured to configure the terminal device according to the indication information.

67. The network function entity of claim 66, wherein
the indication information comprises: access of the terminal device through a satellite, or access of the terminal device through a terrestrial network device.

68. The network function entity of claim 66 or 67, wherein
the indication information comprises at least one of: access of the terminal device to a network through a Low Earth Orbit (LEO) satellite, access of the terminal device to the network through a Medium Earth Orbit (MEO) satellite, or access of the terminal device to the network through a Geosynchronous Equatorial Orbit (GEO) satellite.

69. The network function entity of claim 68, wherein
the indication information further comprises a propagation delay between the terminal device and a network device, wherein the network device comprises at least one of: a base station, a ground gateway or a core network gateway.

70. The network function entity of any one of claims 66-69, wherein the indication information further comprises at least one of a value of a first timer or a value of a second timer,
wherein the first timer comprises a retransmission timer between the terminal device and a Proxy-Call Session Control Function (P-CSCF), and the second timer comprises a wait timer for reception of a reply message by the terminal device.

71. The network function entity of any one of claims 66-70, wherein the indication information is carried by an Authorize/Authenticate-Request (AAR) message, and the network function entity comprises a Policy Control Function (PCF).

72. The network function entity of any one of claims 66-71, wherein
the application server comprises an application server in an Internet Protocol (IP) Multimedia Subsystem (IMS); or
the application server comprises at least one of: a P-CSCF, an Interrogating-Call Session Control Function (I-CSCF), a Service Call Continuity Application Server (SCC AS), or an E.164 Number URI Mapping (ENUM) server.

73. A terminal device comprising a processor and a memory for storing a computer program, the processor being configured to call and run the computer program stored in the memory, to perform the method of any one of claims 1 to 14.

74. An application server comprising a processor and a memory for storing a computer program, the processor being configured to call and run the computer program stored in the memory, to perform the method of any one of claims 15 to 29.

75. A network function entity comprising a processor and a memory for storing a computer program, the processor being configured to call and run the computer program stored in the memory, to perform the method of any one of claims 30 to 36.

76. A chip, comprising:
a processor, configured to call and run a computer program from a memory, to cause a device on which the chip is installed to perform the method of any one of claims 1 to 36.

77. A computer-readable storage medium for storing a computer program,
wherein the computer program causes a computer to perform the method of any one of claims 1 to 36.

78. A computer program product comprising computer program instructions,
wherein the computer program instructions cause a computer to perform the method of any one of claims 1 to 36.

79. A computer program causing a computer to perform the method of any one of claims 1 to 36.
